(19) Europäisches Patentamt European Patent Office Office européen des brevets

(11) **EP 2 556 407 B1**

(12) **EUROPEAN PATENT SPECIFICATION**

(45) Date of publication and mention of the grant of the patent:
**10.07.2019 Bulletin 2019/28**

(21) Application number: **11728658.3**

(22) Date of filing: **07.04.2011**

(51) Int Cl.:
**G02F 1/35** (2006.01)

(86) International application number:
**PCT/HU2011/000031**

(87) International publication number:
**WO 2011/124935 (13.10.2011 Gazette 2011/41)**

(54) **OPTICAL DEVICE FOR BROADBAND NONLINEAR OPTICAL PROCESSES BASED ON ANGULAR DISPERSION**

OPTISCHE VORRICHTUNG FÜR NICHTLINEARE OPTISCHE BREITBANDVERFAHREN AUF DER BASIS VON WINKELDISPERSION

DISPOSITIF OPTIQUE DESTINÉ À DES PROCÉDÉS OPTIQUES NON LINÉAIRES À HAUT DÉBIT BASÉS SUR UNE DISPERSION ANGULAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.04.2010 HU P1000179**

(43) Date of publication of application:
**13.02.2013 Bulletin 2013/07**

(73) Proprietor: **Pécsi Tudományegyetem 7622 Pécs (HU)**

(72) Inventors:
• **FÜLÖP, József**
  **7635 Pécs (HU)**
• **ALMÁSI, Gábor**
  **H-7761 Kozármisleny (HU)**
• **HEBLING, János**
  **7635 Pécs (HU)**
• **TRINN, Tamás**
  **7700 Mohács (HU)**

(74) Representative: **Szabo, Zsolt**
**Danubia**
**Patent & Law Office LLC**
**Bajcsy-Zsilinszky út 16**
**1051 Budapest (HU)**

(56) References cited:
**CN-A- 1 400 487       US-A1- 2002 154 384**
**US-A1- 2003 147 122     US-A1- 2003 227 668**

**Description**

The invention relates to a device and a method for performing broadband nonlinear optical processes. In particular, the present invention is an optical device with achromatic phase matching that enables broadband optical parametric amplification or frequency conversion to be used, especially, in combination with light sources emitting coherent light, as well as a method to accomplish said processes.

To perform nonlinear optical processes, particularly for coherent amplification or frequency conversion of light emitted by broadband or tunable coherent light sources, media with non-linear response can be made use of. To ensure an output of desired bandwidth or tuning range, the bandwidth of amplification or frequency conversion has to be large enough. In numerous optical processes the bandwidth is determined by a phase-matching condition that depends on the dispersion (wavelength-dependence) of the index of refraction of the nonlinear medium used and the directions of propagation (defined by the wave vectors) of the spectral components involved in the nonlinear interaction. In certain cases, the bandwidth limited by the dispersion of the refractive index of the nonlinear medium can be significantly increased through the application of non-collinear geometry and/or angular dispersion.

It is well-known that the bandwidth of a nonlinear optical process can be considerably increased in many cases if a proper amount of angular dispersion is introduced into one or more of the interacting beams in the nonlinear optical process. The angular dispersion is, however, accompanied by an unavoidable spatial beam spreading, i.e. the beam which was initially collimated becomes divergent. From a practical point of view, usually this is unfavorable and should be avoided as it results in a decrease in e.g. the beam intensity even for small propagation distances due to the increasing spot size or impairs beam focusability due to the elliptic beam cross section. Consequently, to eliminate beam spreading, an appropriate imaging optics is inserted between the element introducing the angular dispersion (or the angular dispersive element) and the nonlinear medium, wherein said imaging optics images the exit surface of the former to the entrance surface of the latter.

Such a solution is discussed by a publication of G. Szabo et al. [Appl. Phys. B50 (1990) 51] for frequency doubling or U.S. Patent No. 6,741,388 B2 [Jovanovic et al.] in relation to parametric optical amplification, wherein an optical lens and a telescope built up of lenses, respectively, are utilized as the imaging optics concerned.

Such imaging optics can be used only to a limited extent in systems of high intensity. The reason for this is, on the one hand, the decrease in beam quality when the beam passes through the lens materials and, on the other hand, the chromatic aberration of imaging for broadband light (e.g. ultrashort light pulses), as well as the beam distortion arising as a consequence the latter. Moreover, to avoid destruction of the optical components in laser systems of high intensity, the application of large beam sizes is required. Thus, the aberrations due to the imaging optics utilized become even greater and may considerably limit the useful beam size.

CN Patent No. 1400487 [Xu Zuyuan et al.] discloses an arrangement with diffraction gratings provided on the entrance and exit surfaces of a nonlinear crystal for the introduction of monochromatic laser light, i.e. having a single spectral component, into the nonlinear crystal in a case wherein said introduction is not possible via a direct coupling-in so that the laser light propagate within the crystal along the phase-matching direction. This solution is based on the known property of diffraction gratings that the gratings alter the propagation direction of the light passing therethrough.

CN Patent No. 1400487 deals exclusively with the coupling-in of a monochromatic light beam, it neither discusses nor even hints at simultaneous phase matching for broadband or broadly tunable light. In other words, the arrangements discussed in CN Patent No. 1400487 are suitable merely for phase matching to the lowest (zero) order. That is, when the phase mismatch parameter $\Delta k$ of a nonlinear optical process is considered, all the arrangements of CN Patent No. 1400487 fulfil the condition of $\Delta k(\lambda_0) = 0$ at a specific wavelength of interest, $\lambda_0$, but phase matching is not fulfilled in higher order, that is, $\Delta k'(\lambda_0) \neq 0$, $\Delta k''(\lambda_0) \neq 0$, etc.; here, the prime (') denotes the wavelength derivative. It should be further noted, that in order to keep the notation simple, here only one of the possibly more wavelength arguments of $\Delta k$ is explicitly written out.

In light of the above, the object of the present invention is to provide an optical device, as well as a method, to perform broadband nonlinear optical processes that, on the one hand, allow an attainment of higher bandwidth via employing angular dispersion and, on the other hand, are deprived of disadvantages due to the application of an imaging optics. In particular, the object of the present invention is to provide such a compact optical device, as well as a method, for allowing broadband and/or tunable optical parametric amplification or frequency conversion that utilize the phenomenon of angular dispersion in order to increase the bandwidth, but do not exhibit the above disadvantages due to the application of imaging optics.

A yet further object of the present invention is to provide an optical device which is compact and also exhibits a relatively high bandwidth to perform broadband nonlinear optical processes, and thus ensures phase matching required for such processes, in general, over a wide wavelength range.

In other words, an object of the present invention is to provide an optical device that provides achromatic phase matching. As is known in the art, achromatic phase matching means, in more precise terms, that the phase matching condition is simultaneously fulfilled to at least first order, that is

$$\Delta k(\lambda_0) = 0 \text{ , and} \qquad\qquad (1)$$

$$\Delta k'(\lambda_0) = 0 \text{ .} \qquad\qquad (2)$$

With the above notations, hence, arrangements of CN Patent No. 1400487 fulfil typically only condition (1). For achromatic phase matching, i.e. in the case of the present invention, both conditions (1) and (2), and possibly even further conditions for higher-order phase matching, are fulfilled. This distinguishing technical feature enables the present invention to significantly extend the bandwidth of various nonlinear optical processes over the one typically achievable with zero-order phase matching only.

It should also be noted that the phase matching of a coupled-in light beam with multispectral composition might be approximately accomplished preferably at a certain (i.e. the central) wavelength, $\lambda_0$, with a small bandwidth even without the presence of an angular dispersive element. However, making use of an angular dispersive element fulfilling phase matching to at least first order ensures that, through introducing angular dispersion into the coupled-in light beam, the condition for being phase-matched is fulfilled over a wide wavelength range since said element directs each frequency component of coherent light pulses emitted by e.g. a broadband laser source into the respective corresponding phase-matching direction. To this end, it is actually required that grating parameters (e.g. groove density) be provided that differ from those being sufficient for a monochromatic laser beam to be simply coupled in or an other angular dispersive element be utilized.

Owing to the solutions in accordance with the invention, broadband amplifiers and frequency converters being more compact than existing similar devices can be constructed which can be highly preferentially utilized in combination with e.g. light sources that emit coherent light (e.g. laser oscillators).

The object related to the provision of a compact optical device to perform broadband nonlinear optical processes is achieved by accomplishing an optical device as set forth in Claim 1. Further preferred embodiments of said optical device are defined by Claims 2 to 8. The object related to the provision of a method for performing broadband nonlinear optical processes is accomplished by providing a method as defined in Claim 9. Possible further preferred variants of the method according to the invention are set forth in Claims 10 to 13.

From now on, the inventive solutions are discussed in detail in relation to preferred embodiments thereof with reference to the attached drawings, wherein

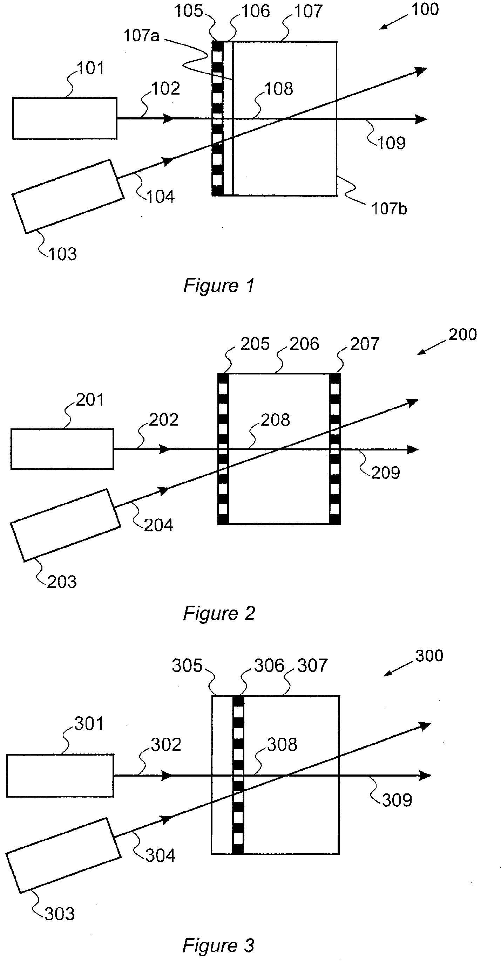

- Figure 1 is a schematic representation of a first embodiment of the optical device according to the invention that exhibits an angular dispersive element and an element for optical coupling on its input side;
- Figure 2 is a schematic representation of a second embodiment of the optical device according to the invention that is provided with an angular dispersive element on its input side and an element with angular dispersion compensating property on its output side;
- Figure 3 is a schematic representation of a third embodiment of the optical device according to the invention, wherein a cover medium of appropriate optical properties covers an angular dispersive element located on the input side;

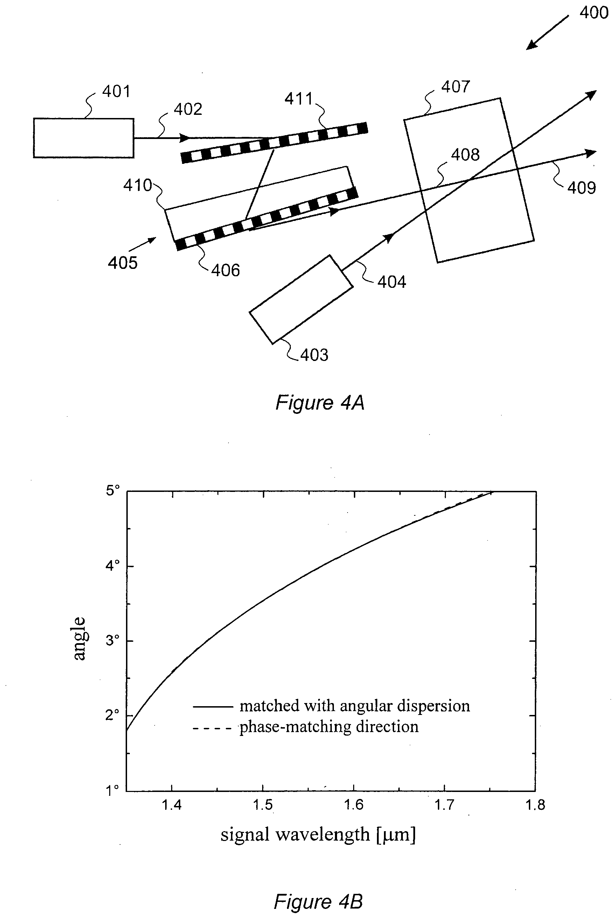

- Figure 4A is a schematic representation of an embodiment of the inventive optical device illustrated in Figure 1, wherein the angular dispersive element located on the input side consists of a first optical grating formed on a planoparallel substrate and a second optical grating formed on the exit surface of a wedge arranged close to said substrate, wherein both gratings have a grating constant of 3.333 $\mu$m, the angle between the two gratings is 6.97°, the apex angle of the wedge made of material BK7 is 2.96° and the angle of incidence onto the first grating is 80.43°;
- Figure 4B shows calculated signal wave angular dispersion curves for optical parametric amplification [dashed line: values of angle required by the broadband phase matching; continuous line: values of angle obtained for the angle dispersive element of the embodiment of the optical device according to the invention illustrated in Figure 4A] at a pump wavelength of 1.064 $\mu$m and a signal wavelength of about 1.5 $\mu$m (pump of extraordinary polarization, with phase matching of the ordinary signal and the idler) at an angle of $\alpha = 3.4°$ between the pump and the signal in a non-collinear amplifying geometry containing an $LiNbO_3$ crystal as the nonlinear optical medium;

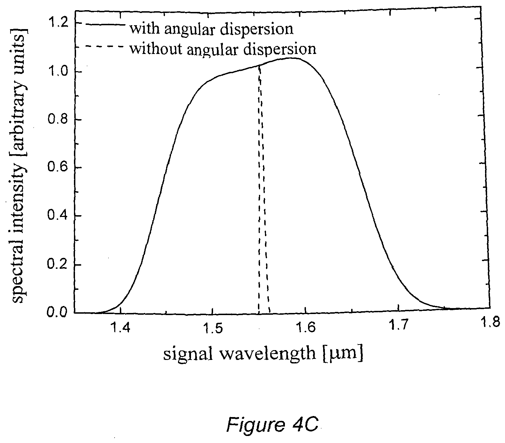

- Figure 4C shows calculated amplification curves for optical parametric amplification for coupling-in at various amounts of angular dispersion [dashed line: without angular dispersion of the signal; continuous line: with angular dispersion of the signal according to the continuous line of Figure 4B] when assuming a crystal length of L = 5 mm.

In what follows, some exemplary embodiments of the compact optical device according to the invention are discussed in detail with reference to Figures 1 to 3.

The optical device 100 according to the invention comprises a nonlinear medium 107 having entrance and exit surfaces 107a, 107b and an angular dispersive element 105 in optical coupling with the entrance surface 107a through an optical contact 106. In the optical device 100, the angular dispersive element 105 is coupled to the nonlinear medium 107 directly with no imaging optics inserted therebetween, apart from said optical contact 106. The angular dispersive element 105 is provided by e.g. at least one diffraction-based element (preferentially one or more optical gratings), or at least one refraction-based element (preferentially one or more prisms) or any combinations thereof (that is, e.g. a so-called grism or grating prism which is a prism combined with a grating). The optical contact 106 is provided by e.g. a short propagation distance in vacuum or in air, or a dielectric material (e.g. glass or an adhesive), or a composition of various dielectric materials (e.g. optical thin films) or any combinations thereof. When applied, the optical contact 106 is chosen/formed so as to obtain such a propagation distance to be travelled by a beam with angular dispersion through said optical contact 106 which is sufficiently small in order that any further incidental beam expansion effects due to the optical contact 106 be negligible from the point of view of the application concerned.

In a possible further embodiment, the angular dispersive element 105 is formed directly on/in the surface of the nonlinear medium 107; in such a case there is no optical contact 106. In a possible yet further embodiment, the angular dispersive element 105 is formed within the bulk nonlinear medium 107 itself at a given depth from the entrance surface 107a along the beam propagation direction; there is no need for the optical contact 106 in this case either.

The optical device 100 serves for performing nonlinear optical processes. In what follows, the operation of said optical device 100 according to the invention is outlined in brief. To this end, optical parametric amplification and/or frequency conversion are/is considered as the nonlinear optical process.

An input signal 102 coupled into the optical device 100 through the entrance surface 107a is generated by a broadband and/or tunable signal emission source 101. When said signal 102 is coupled into the nonlinear medium 107 through the optical contact 106, said angular dispersive element 105 introduces an adequate amount of angular dispersion into the signal 102. Here, the signal 108 travelling within the nonlinear medium 107 interacts with a pump beam 104 generated by a pump source 103 and coupled also into the nonlinear medium 107. An output signal 109 amplified or frequency converted via the nonlinear optical interaction that takes place within the nonlinear medium 107 exits said nonlinear medium 107 through its exit surface 107b.

A possible further embodiment of the optical device according to the invention is illustrated in Figure 2. An input signal 202 generated by a broadband and/or tunable signal emission source 201 is coupled into this optical device 200. When said signal 202 is coupled directly into the nonlinear medium 206, an adequate amount of angular dispersion is induced in said signal 202 by an angular dispersive element 205. The signal 208 travelling in the nonlinear medium 206 interacts with a pump beam 204 generated by a pump source 203. An output signal 209 amplified or frequency converted via the nonlinear optical interaction that takes place within the nonlinear medium 206 exits said nonlinear medium 206, in this case through an angular dispersion compensating element 207 that is optically coupled with the exit surface of said nonlinear medium 206. Thus, the output signal 209 no longer contains angular dispersion. It is noted that, similarly to the arrangement shown in Figure 1, said angular dispersion compensating element 207 can be equally formed/arranged along the beam propagation direction downstream of said angular dispersive element 205 within the nonlinear medium 206 itself and/or on its exit surface.

A possible yet further embodiment of the optical device according to the invention is shown in Figure 3. An input signal 302 generated by a broadband and/or tunable signal emission source 301 is coupled into this optical device 300. In this embodiment, the input signal 302 reaches an angular dispersive element 306 when passing through a cover medium 305. An adequate amount of angular dispersion is introduced into said signal 302 by said angular dispersive element 306 when said signal 302 enters the nonlinear medium 307. The signal 308 travelling within said nonlinear medium 307 interacts with a pump beam 304 generated by a pump source 303. An output signal 309 amplified or frequency converted via the nonlinear optical interaction exits said nonlinear medium 307.

A practical embodiment of the optical device according to the invention is shown in Figure 4A. An input signal 402 generated by a broadband and/or tunable signal emission source 401 is coupled into this optical device 400. In this embodiment, an adequate amount of angular dispersion is introduced into said signal 402 by passing it through an angular dispersive element 405 comprising an optical grating 411, a wedge 410 and a further optical grating 406 provided on the exit surface of said wedge 410. After entering the nonlinear medium 407, the signal 408 travelling within the nonlinear medium 407 interacts with a pump beam 404 generated by a pump source 403. An output signal 409 amplified or frequency converted via the nonlinear optical interaction exits said nonlinear medium 407.

Reverting now to the optical device 100 shown in Figure 1, in the case of broadband parametric amplification, the input signal 102 is typically a low-energy ultrashort light pulse. The pump source 103 emits typically a short light pulse, the duration of which falls typically into the femtosecond, pikosecond or nanosecond range. The nonlinear medium 107 is, for example, a birefringent nonlinear crystal (in particular, e.g. barium borate (BBO), lithium borate (LBO), potassium dihydrogen phosphate (KDP), deuterated potassium dihydrogen phosphate (DKDP), potassium titanyl phosphate (KTP), potassium titanyl arsenate (KTA), lithium niobate ($LiNbO_3$) or any other suitable material) arranged in the light path with appropriate axis orientation, in which phase matching can be obtained at the central wavelength of the pump and the signal. Depending on the wavelengths employed and the material of the nonlinear crystal, said phase matching can be either collinear or non-collinear; specifically, for the optical device sketched in Figure 1, non-collinear phase matching is attained. The bandwidth of a parametric amplifier is determined by the index of refraction of the nonlinear medium, besides beam direction. In many cases, the bandwidth can be remarkably increased by utilizing angular dispersion, as it is disclosed for the signal beam in U.S. Patent No. 6,741,388 B2 already cited. It is noted that in certain cases an adequate angular dispersion of the pump may result in an increase of the bandwidth if the pump beam is broadband enough (when e.g. the pulse duration falls into the femtosecond range). As it was already discussed, the devices suitable for introducing angular dispersion can be devices based on diffraction (e.g. optical grating(s)), devices based on refraction (e.g. prism(s)) or the combinations thereof. Due to angular dispersion, an initially collimated beam becomes divergent which is disadvantageous for most applications because as a consequence of e.g. an increased spot size the beam intensity decreases and the elliptic beam cross section impairs focusability. To eliminate these difficulties such an imaging optics has been applied earlier that imaged the output of the angular dispersive element to the input of the nonlinear crystal. Various image defects, however, led to beam distortions that limited the useful beam size. This limitation was particularly significant in systems of high power.

The operation of the embodiments of the optical device according to the invention illustrated in Figures 1 to 3 and Figure 4A can be described in relation to further examples of broadband nonlinear optical processes, in particular for frequency conversion processes, similarly to the case of optical parametric amplification considered earlier. Such processes can be e.g. the sum and difference frequency generation, wherein the output signals 109, 209, 309, 409 are actually the frequency converted signals, as it is apparent to a person skilled in the art. In such processes, as in the case of optical parametric amplification, it is quite frequent that one of the input beams (typically the pump beam 104, 204, 304, 404) is a narrowband beam, the angular dispersion of which is negligible. In certain cases - such might be the case of e.g. the second or third harmonic generation, optical rectification, etc. - there is only one input beam.

The optical device according to the invention allows the construction of compact parametric amplification or frequency conversion devices. Contrary to the setups employing optical imaging elements (imaging optics), a further advantage of the optical device according to the invention is the lack of image defects. Due to this, larger beam sizes can be used that allows the inventive optical device to be used in laser systems of large power and the construction of such systems. Moreover, the optical device according to the invention can be used as a separate stage in multi-stage or hybrid optical parametric amplification systems (further details of such systems can be found e.g. in U.S. Patent No. 6,870,664 B2, U.S. Patent No. 6,873,454 B2, U.S. Patent No. 6,791,743 B2 and U.S. Patent No. 6,775,053).

The optical device according to the invention can also be used in tunable and/or high power and/or ultrafast laser systems. By means of that, light sources suitable for e.g. laser electron acceleration, materials examination, spectroscopy can be constructed. A yet further field of utilization for such light sources is hadron therapy in the field of medical sciences which is based on high energy ion beams created by high intensity lasers.

Furthermore, the optical device according to the invention allows the development of such high power laser systems, especially in the infrared wavelength range (e.g. about the wavelength of 1.5 $\mu$m), the pulse duration of which is shorter than what is achievable in this wavelength range by other techniques nowadays. It is an effective solution to apply diode-pumped solid-state lasers in a direct way, that is, without frequency conversion that decreases efficiency in said wavelength range for pumping the optical parametric amplifier. In high power systems, due to large beam sizes, only those crystals can be used from among the crystals suitable for optical parametric amplification or frequency conversion that can be manufactured with sufficiently large dimensions and good optical quality. Up to now, KTA and/or KTP crystals have been and are used for broadband optical parametric amplification in the near infrared range, e.g. in the vicinity of the wavelength of 1.5 $\mu$m (see e.g. the publication of O. D. Mücke et al. [Advances in Solid State Lasers Development and Applications, edited by M. Grishin, In-Tech, 2010]). Said crystals, however, are not available at present with large dimensions (i.e. with an aperture of 5 to 10 cm), and also exhibit relatively low nonlinear coefficients.

Contrary to this, $LiNbO_3$ crystals that are also available and/or can be manufactured with relatively large dimensions ($\sim$ 10 cm) can be used in the optical device according to the invention advantageously, as it is shown in Figures 4A, 4B and 4C. In particular, in the case of a $LiNbO_3$ crystal with a length of L = 5 mm, and for a pump wavelength of e.g. about 1 $\mu$m and a signal having a wavelength of about 1.5 $\mu$m, and for a case wherein the effective nonlinearity is much higher than the nonlinear coefficients of KTA/KTP crystals (pump with extraordinary polarization, ordinary signal and idler, i.e. exploiting the phase matching of p(e) -> s(o) + i(o)), a bandwidth of about 5 nm can be obtained at zero angular dispersion (see the dashed line of Figure 4C). If, however, the angular dispersion of the input signal is chosen in accordance with the solid line of Figure 4B, the available bandwidth for the amplification can be increased above 200 nm, as it is represented by the amplification curve, indicated by a solid line, of Figure 4C. Thus, Figure 4C clearly shows the advantage of the present invention: it provides about a forty-fold increase in the bandwidth.

Taking the above into consideration, an optical parametric amplifier that is efficient, compact and scalable for high powers can be constructed by means of the optical device according to the invention, in particular, for applications in the near infrared range if a $LiNbO_3$ crystal is used as the nonlinear optical medium therein.

**Claims**

1. An optical device (100; 200; 300; 400) to perform nonlinear optical processes, the optical device comprises a nonlinear optical medium (107; 206; 307; 407) having an entrance surface and an exit surface, and an angular dispersive element (105; 205; 306; 405) in direct optical coupling with the nonlinear optical medium (107; 206; 307; 407) with no imaging optics inserted between the nonlinear optical medium (107; 206; 307; 407) and the angular dispersive element (105; 205; 306; 405), *characterized in* **that** the angular dispersive element (105; 205; 306; 405) directs each frequency component of a broadband incident light beam (102; 202; 302; 402) into its respective phase matching direction within the nonlinear medium (107; 206; 307; 407).

2. The optical device according to Claim 1, **characterized in that** an element (207) with broadband angular dispersion compensating property is in optical coupling with the exit surface of the nonlinear medium (206).

3. The optical device according to Claim 2, **characterized in that** said element (207) with angular dispersion compensating property is formed within the nonlinear medium (206) or on the exit surface thereof.

4. The optical device according to any of Claims 1 to 3, **characterized in that** the broadband angular dispersive element (105; 205; 306; 405) is formed/arranged within the nonlinear medium (107; 206; 307; 407) or on the entrance surface (107a) thereof.

5. The optical device according to any of Claims 1 to 4, **characterized in that** said broadband angular dispersive element (105; 205; 306; 405) is in the form of a diffraction- and/or refraction-based angular dispersive element.

6. The optical device according to Claim 5, **characterized in that** said diffraction- and/or refraction-based broadband angular dispersive element is provided by at least one of: diffraction grating, prism, prism combined with a diffraction grating, i.e. grism.

7. The optical device according to any of Claims 1 to 6, **characterized in that** said nonlinear medium (107; 206; 307; 407) is provided by at least one of: barium borate (BBO), lithium borate (LBO), potassium dihydrogen phosphate (KDP), deuterated potassium dihydrogen phosphate (DKDP), potassium titanyl phosphate (KTP), potassium titanyl arsenate (KTA), lithium niobate ($LiNbO_3$) crystals or any combinations of the above crystals.

8. The optical device according to Claim 7, **characterized in that** the nonlinear medium (107; 206; 307; 407) is provided by a $LiNbO_3$ crystal.

9. A method for performing a nonlinear optical process in a nonlinear optical medium (107; 206; 307; 407), wherein at least one coherent light beam is coupled into the nonlinear optical medium without being transmitted through an optical imaging system and then the coupled-in light beam is subjected to a nonlinear optical process via nonlinear optical interaction in the nonlinear medium, *characterized in* **that** the at least one light beam (102, 104; 202, 204; 302, 304; 402, 404) is a light beam with multispectral composition and that the coupling of said light beam into the nonlinear optical medium (107; 206; 307; 407) to perform the nonlinear optical process is carried out with introducing angular-dispersion-based achromatic extension of the phase-matching range into the at least one light beam, that is, directing each frequency component of said light beam through angular dispersive coupling-in simultaneously into its respective phase matching direction within the nonlinear medium (107; 206; 307; 407).

10. The method according to Claim 9, **characterized in that** optical parametric amplification of ultrashort light pulses making up the light beam is performed as the nonlinear optical process.

11. The method according to Claim 9, **characterized in that** frequency conversion of ultrashort light pulses making up the light beam is performed as the nonlinear optical process.

12. The method according to any of Claims 9 to 11, **characterized in that** said angular dispersive coupling-in is completed by means of a diffraction- and/or refraction-based broadband angular dispersive element (105; 205; 306; 405).

13. The method according to Claim 12, **characterized in that** the broadband angular dispersive element (105; 205; 306; 405) is formed/arranged within the nonlinear medium (107; 206; 307; 407) or on an entrance surface (107a) thereof.

**14.** A coherent multispectral light source, ***characterized in* that** it comprises an optical device (100; 200; 300; 400) according to any of Claims 1 to 8.

**Patentansprüche**

**1.** Optische Vorrichtung (100; 200; 300; 400) zum Durchführen nichtlinearer optischer Verfahren, wobei die optische Vorrichtung ein nichtlineares optisches Medium (107; 206; 307; 407) mit einer Eintrittsfläche und einer Austrittsfläche und ein winkelförmiges dispersives Element (105; 205; 306; 405) in direkter optischer Kopplung mit dem nichtlinearen optischen Medium (107; 206; 307; 407) umfasst, wobei keine Abbildungsoptik zwischen dem nichtlinearen optischen Medium (107; 206; 307; 407) und dem winkelförmigen dispersiven Element (105; 205; 306; 405) eingefügt ist, ***dadurch gekennzeichnet, dass*** das winkelförmige dispersive Element (105; 205; 306; 405) jede Frequenzkomponente eines breitbandigen einfallenden Lichtstrahls (102; 202; 302; 402) in seine jeweilige Phasenanpassungsrichtung innerhalb des nichtlinearen Mediums (107; 206; 307; 407) lenkt.

**2.** Optische Vorrichtung nach Anspruch 1, **dadurch gekennzeichnet, dass** ein Element (207), das eine Eigenschaft zum Kompensieren breitbandiger Winkeldispersion aufweist, mit der Austrittsfläche des nichtlinearen Mediums (206) optisch gekoppelt ist.

**3.** Optische Vorrichtung nach Anspruch 2, **dadurch gekennzeichnet, dass** das Element (207), das eine Eigenschaft zum Kompensieren breitbandiger Winkeldispersion aufweist, innerhalb des nichtlinearen Mediums (206) oder auf dessen Austrittsfläche ausgebildet ist.

**4.** Optische Vorrichtung nach einem der Ansprüche 1 bis 3, **dadurch gekennzeichnet, dass** das breitbandige winkelförmige dispersive Element (105; 205; 306; 405) innerhalb des nichtlinearen Mediums (107; 206; 307; 407) oder auf dessen Eintrittsfläche (107a) ausgebildet/angeordnet ist.

**5.** Optische Vorrichtung nach einem der Ansprüche 1 bis 4, **dadurch gekennzeichnet, dass** das breitbandige winkelförmige dispersive Element (105; 205; 306; 405) in Form eines auf Beugung und/oder Brechung basierenden winkelförmigen dispersiven Elements vorliegt.

**6.** Optische Vorrichtung nach Anspruch 5, **dadurch gekennzeichnet, dass** das auf Beugung und/oder Brechung basierende breitbandige winkelförmige dispersive Element durch mindestens eines aus Beugungsgitter, Prisma, mit einem Beugungsgitter kombiniertem Prisma, d.h. Gitterprisma, bereitgestellt wird.

**7.** Optische Vorrichtung nach einem der Ansprüche 1 bis 6, **dadurch gekennzeichnet, dass** das nichtlineare Medium (107; 206; 307; 407) durch mindestens eines aus Bariumborat (BBO), Lithiumborat (LBO), Kaliumdihydrogenphosphat (KDP), deuteriertes Kaliumdihydrogenphosphat (DKDP), Kaliumtitanylphosphat (KTP), Kaliumtitanylarsenat (KTA), Lithiumniobat-(LiNbO$_3$-)Kristalle oder beliebigen Kombinationen der obigen Kristalle bereitgestellt wird.

**8.** Optische Vorrichtung nach Anspruch 7, **dadurch gekennzeichnet, dass** das nichtlineare Medium (107; 206; 307; 407) durch einen LiNbO$_3$-Kristall bereitgestellt wird.

**9.** Verfahren zum Durchführen eines nichtlinearen optischen Verfahrens in einem nichtlinearen optischen Medium (107; 206; 307; 407), wobei mindestens ein kohärenter Lichtstrahl in das nichtlineare optische Medium eingekoppelt wird, ohne durch ein optisches Abbildungssystem transmittiert zu werden, und dann der eingekoppelte Lichtstrahl über nichtlineare optische Wechselwirkung im nichtlinearen Medium einem nichtlinearen optischen Verfahren unterzogen wird, ***dadurch gekennzeichnet, dass*** der mindestens eine Lichtstrahl (102, 104; 202, 204; 302, 304; 402, 404) ein Lichtstrahl mit multispektraler Zusammensetzung ist und dass die Einkopplung des Lichtstrahls in das nichtlineare optische Medium (107; 206; 307; 407) zur Durchführung des nichtlinearen optischen Verfahrens mit Einführen einer auf Winkeldispersion basierenden achromatischen Ausweitung des Phasenanpassungsbereichs in den mindestens einen Lichtstrahl erfolgt, das heißt, dass jede Frequenzkomponente des Lichtstrahls durch winkelförmige dispersive Einkopplung gleichzeitig in seine jeweilige Phasenanpassungsrichtung innerhalb des nichtlinearen Mediums (107; 206; 307; 407) gelenkt wird.

**10.** Verfahren nach Anspruch 9, **dadurch gekennzeichnet, dass** optische parametrische Verstärkung ultrakurzer Lichtimpulse, die den Lichtstrahl bilden, als das nichtlineare optische Verfahren durchgeführt wird.

**11.** Verfahren nach Anspruch 9, **dadurch gekennzeichnet, dass** die Frequenzumsetzung ultrakurzer Lichtimpulse, die den Lichtstrahl bilden, als das nichtlineare optische Verfahren durchgeführt wird.

**12.** Verfahren nach einem der Ansprüche 9 bis 11, **dadurch gekennzeichnet, dass** die winkelförmige dispersive Einkopplung mittels eines auf Beugung und/oder Brechung basierenden breitbandigen winkelförmigen dispersiven Elements (105; 205; 306; 405) vervollständigt wird.

**13.** Verfahren nach Anspruch 12, **dadurch gekennzeichnet, dass** das breitbandige winkelförmige dispersive Element (105; 205; 306; 405) innerhalb des nichtlinearen Mediums (107; 206; 307; 407) oder an einer Eintrittsfläche (107a) davon ausgebildet/angeordnet ist.

**14.** Kohärente multispektrale Lichtquelle, **dadurch gekennzeichnet, dass** sie eine optische Vorrichtung (100; 200; 300; 400) nach einem der Ansprüche 1 bis 8 umfasst.

**Revendications**

**1.** Dispositif optique (100 ; 200 ; 300 ; 400) pour effectuer des procédés optiques non linéaires, le dispositif optique comprenant un support optique non linéaire (107 ; 206 ; 307 ; 407) ayant une surface d'entrée et une surface de sortie, et un élément dispersif angulaire (105 ; 205 ; 306 ; 405) en couplage optique direct avec le support optique non linéaire (107; 206; 307 ; 407) sans aucune optique d'imagerie insérée entre le support optique non linéaire (107 ; 206; 307 ; 407) et l'élément dispersif angulaire (105 ; 205 ; 306; 405), *caractérisé en ce que* l'élément dispersif angulaire (105 ; 205 ; 306 ; 405) dirige chaque composante de fréquence d'un faisceau lumineux incident à bande large (102 ; 202 ; 302 ; 402) dans sa direction d'accord de phase dans le support non linéaire (107 ; 206 ; 307 ; 407).

**2.** Dispositif optique selon la revendication 1, **caractérisé en ce qu'**un élément (207) doté d'une propriété de compensation de dispersion angulaire à bande large est en couplage optique avec la surface de sortie du support non linéaire (206).

**3.** Dispositif optique selon la revendication 2, **caractérisé en ce que** ledit élément (207) doté d'une propriété de compensation de dispersion angulaire est formé dans le support non linéaire (206) ou sur sa surface de sortie.

**4.** Dispositif optique selon l'une quelconque des revendications 1 à 3, **caractérisé en ce que** l'élément dispersif angulaire à bande large (105 ; 205 ; 306 ; 405) est formé/agencé dans le support non linéaire (107 ; 206 ; 307 ; 407) ou sur sa surface d'entrée (107a).

**5.** Dispositif optique selon l'une quelconque des revendications 1 à 4, **caractérisé en ce que** ledit élément dispersif angulaire à bande large (105 ; 205 ; 306 ; 405) se présente sous la forme d'un élément dispersif angulaire à base de diffraction et/ou de réfraction.

**6.** Dispositif optique selon la revendication 5, **caractérisé en ce que** ledit élément dispersif angulaire à bande large à base de diffraction et/ou de réfraction est fourni par au moins l'un d'un réseau de diffraction, d'un prisme, d'un prisme combiné à un réseau de diffraction, c'est-à-dire d'un grisme.

**7.** Dispositif optique selon l'une quelconque des revendications 1 à 6, **caractérisé en ce que** ledit support non linéaire (107 ; 206 ; 307 ; 407) est fourni par au moins l'un des suivants : cristaux de borate de baryum (BBO), de borate de lithium (LBO), de dihydrogénophosphate de potassium (KDP), de dihydrogénophosphate de potassium deutérisé (DKDP), de titanylphosphate de potassium (KTP), de titanylarséniate de potassium (KTA), de niobate de lithium ($LiNbO_3$) ou de combinaisons quelconques des cristaux précités.

**8.** Dispositif optique selon la revendication 7, **caractérisé en ce que** le support non linéaire (107 ; 206 ; 307 ; 407) est fourni par un cristal de $LiNbO_3$.

**9.** Procédé de réalisation d'un procédé optique non linéaire dans un support optique non linéaire (107 ; 206; 307 ; 407), dans lequel au moins un faisceau lumineux cohérent est couplé dans le support optique non linéaire sans être transmis à travers un système d'imagerie optique, puis le faisceau lumineux couplé est soumis à un procédé optique non linéaire via une interaction optique non linéaire dans le support non linéaire, *caractérisé en ce que* le au moins un faisceau lumineux (102, 104; 202, 204; 302, 304 ; 402, 404) est un faisceau lumineux avec une composition multispectrale et le couplage dudit faisceau lumineux dans le support optique non linéaire (107 ; 206 ; 307 ; 407) pour effectuer le procédé optique non linéaire est effectué en introduisant une extension achromatique basée sur une dispersion angulaire de la plage d'accord de phase dans le au moins un faisceau lumineux, c'est-à-dire en dirigeant chaque composante de fréquence dudit faisceau lumineux à travers le couplage dispersif angulaire simultanément dans sa direction d'accord de phase respective dans le support non linéaire (107 ; 206; 307 ; 407).

**10.** Procédé selon la revendication 9, **caractérisé en ce qu'**une amplification paramétrique optique d'impulsions lumineuses ultracourtes constituant le faisceau lumineux est effectuée comme procédé optique non linéaire.

**11.** Procédé selon la revendication 9, **caractérisé en ce qu'**une conversion de fréquence impulsions lumineuses ultracourtes constituant le faisceau lumineux est effectuée comme procédé optique non linéaire.

**12.** Procédé selon l'une quelconque des revendications 9 à 11, **caractérisé en ce que** ledit couplage dispersif angulaire est effectué au moyen d'un élément dispersif angulaire à large bande à base de diffraction et/ou de réfraction (105 ; 205 ; 306 ; 405).

**13.** Procédé selon la revendication 12, **caractérisé en ce que** l'élément dispersif angulaire à large bande (105 ; 205 ; 306 ; 405) est formé/agencé dans le support non linéaire (107 ; 206 ; 307 ; 407) ou sur sa surface d'entrée (107a).

**14.** Source de lumière multispectrale cohérente, *caractérisée en ce* **qu'**il comprend un dispositif optique (100 ; 200 ; 300 ; 400) selon l'une quelconque des revendications 1 à 8.

*Figure 1*

*Figure 2*

*Figure 3*

*Figure 4A*

*Figure 4B*

*Figure 4C*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6741388 B2, Jovanovic
- CN 1400487, Xu Zuyuan
- US 6870664 B2
- US 6873454 B2
- US 6791743 B2
- US 6775053 B

**Non-patent literature cited in the description**

- **G. SZABO et al.** *Appl. Phys.,* 1990, vol. B50, 51
- **O. D. MÜCKE et al.** Advances in Solid State Lasers Development and Applications. 2010